# EUROPEAN PATENT APPLICATION

(11) **EP 2 672 402 A1**
(43) Date of publication of application: **11.12.2013**
(21) Application number: 13170977.6
(22) Date of filing: 07.06.2013
(51) Int. Cl.: G06F 17/30, G06Q 30/00

(54) **Method of presentation of audiovisual content and system to perform the method**

(30) Priority: 07.06.2012 CZ 20120378
(71) Applicant: Videoboard Europe, a.s., 16000 Praha (CZ)
(72) Inventor: Jezbera, Jan, 19000 Praha (CZ); Leitner, Peter, 91501 Nové Mesto nad Váhom (SK); Cellárová, Anna, 97644 Mýto pod umbierom (SK); Zácik, Boris, 94123 Nové Zámky (SK)
(74) Representative: Musil, Dobroslav

(57) **Abstract**

The invention relates to a method of presentation of audiovisual content to the end user, in which in part of the area of a remote display device there is performed presentation of audiovisual content, whereby in the remaining part of the area of the remote display device there are presented other information as part of working area. The presentation of audiovisual content is performed in part of the area of the display of the digital device of the end user after starting the client application by the end user, whereby in the remaining part of the area of the display within the working area of the client application are presented apart of presentation of other informations, also options for interaction of the end user to the working area of the client application, wherein after the interaction of the end user with the working area of the client application changes the area of presentation of audiovisual content within the working area of the client application and in the original area of the presentation of audiovisual content there is presented an interactive activity selected by the end user.

The invention also relates to a system for presentation of audiovisual content to end user, which comprises means for data storage for distant storage of audiovisual content by its creator and further comprises means for ensuring the presentation of audiovisual content on a remote display device. The system further consists of a client application installable on a digital device of the end viewer, the client application comprises means of remote connection of the digital device of the end viewer through a communication network and means of logging the end viewer on to the end viewer's account in the system, whereby the client application comprises a graphical user interface shown on the display of the digital device of the end viewer and the graphical user interface is divided into a segment for separate presentation of audiovisual content distributed by the system, segments for presentation of other information and at least one segment for the interaction of the end viewer with the graphical user interface and with the processes displayed or presented continuously on the graphical user interface,where the segment for interactive activity is functionally interconnected with the segment for separate presentation of audiovisual content and at least one other segment for presentation of other information.

## Description

### Technical field

The invention relates to a method of presentation of audiovisual content to end user, in which there is performed a presentation of audiovisual content in part of area of a remote display device , whereby in the remaining part of area of the said display device there are presented other information as part of working area.

The invention also relates to a system for presentation of audiovisual content to the end user, which comprises storage means for remote storage of audiovisual content by its creator and further comprises means for providing presentation of audiovisual content on a remote display device.

### Background art

There are known web video servers which provide content to the user through connection of the user by means of their digital device and web browser or by means of a special web server application. The content is provided to the user on-line by streaming to the digital device of the user. The disadvantage of these methods is the fact that communication lines are heavily loaded each time the content displaye and, moreover, there is practically no interaction of these services with the user who, in principle, only chooses certain content to view.

The documents US 2011/0126254 and WO 2010/064137 disclose a method and system for video distribution and management. This solution deals mainly with easy ways to create advertising and information campaigns on the client's part and gives a detailed description of the method and system used by the creator of the campaign. The author of the campaign has access to the control centre, for example with the aid of a standard internet connection and an internet browser, whereby the creator of the campaign in this remote manner records the chosen content (such as a video clip, an advertisement, a static photograph or a picture, etc.) into the system, and by means of the functions of the system he or she chooses time, region, language etc. sphere of action of the set up campaign. Subsequently, the system itself autonomously ensures the display of the chosen content in part of the display areaof a public remote display device, namely according to time, regional, language and other parameters set by the author of the campaign when entering the campaign into the system. As a general rule, remote display devices are display devices located in public places or publicly observable areas, such as waiting rooms, cafeterias, shop windows and other places. As there is a plurality of campaigns set in the system, they are displayed in turn upon the autonomous commands of the system in accordance with the setting of each campaign done by its creator.

The display area of the remote display device is divided into several sections, whereby in one of them the set up campaigns are displayed in order determined by the system, and in the remaining parts of the display area there is shown supplementary information, whether static or moving, such as information about weather, news (national, regional, sports etc.), wherein this information can also be taken from other sources than is the system controlling the display of the given campaigns, for example from servers of providers of news, data, etc.

The drawback of this embodiment is low or, to be precise, almost zero interactivity for end viewer who watches the remote display device and information displayed on it. Placing a remote display device in public places or publicly observable places has proved to be a limiting factor, also in connection with difficulty in keeping statistical records of the number of performed displays of the set up campaigns to a defined group of target viewers.

Therefore the goal of the invention is both increasing interaction with end viewer/user in order to keep the end viewer's/user's attention when watching the set up campaigns, and spreading the application of the method and device also to private places, as well as improving statistical records of performed displays of the campaigns aimed at a defined group of target viewers/users.

### Principle of the invention

Objective of present invention has been achieved by a method of presentation of audiovisual content, whose principle consists in that presentation of audiovisual content is performed in part of area of display of digital device of end user after starting a client application by end user, whereby in the remaining part of the area of the display within working area of the client application are presented apart of presentation of other information also options for interaction of the end user to the working areaof the client application, wherein after the interaction of the end user to the working areaof the client application, the area of presentation of audiovisual content within the working area of the client application changes and in original area of presentation of audiovisual content there is presented an interactive activity selected by the end user.

Principle of system for presentation of audiovisual content consists in that the system comprises a client application installable on a digital device of end user, the client application comprises means of remote connection of the digital device of the end user through communication network to the system and for logging-in of the end user to user's account in the system, whereby the client application comprises a graphical user interface displayed on the display of the digital device of the end user and the graphical user interface is divided into a segment for separate presentation of audiovisual content distributed by the system, segments for presentation of other informations and at least one segment for interaction of the end user with the graphical user interface and with the processes displayed or presented continuously on the graphical user interface, where the segment for interaction is functionally interconnected with a segment for separate presentation of audiovisual content and at least one other segment for presentation of other informations.

Advantage of the present invention is a considerable increase in the number of potential end users, since there are vast amounts of owners of digital devices with a data connection to the data network, whereby by using elements of interactivity, such as simple games and activities, in a preferable embodiment further supported by rewards for using the client application the whole system becomes more attractive for the end user, while higher number of registered end users means to increasing interest of campaign creators and, again, to bigger chances of getting rewards for the end users, etc.

### Description of drawings

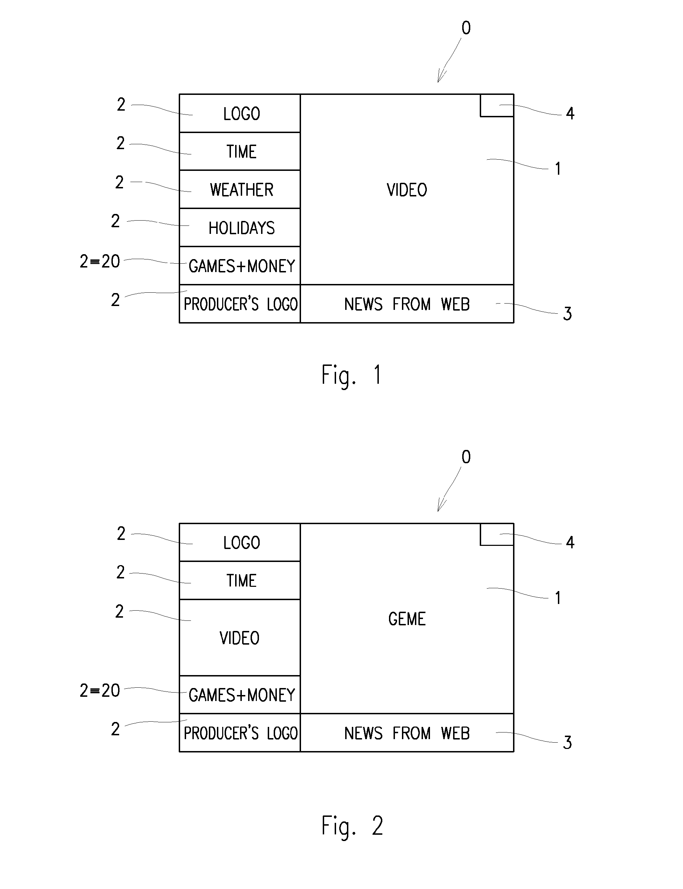

The invention is schematically shown in the drawing, where fig. 1 shows an example of a working area of a client application with displaying the set up campaigns in the main segment, and fig. 2 illustrates an example of a working area of a client application interactively switched by the end user into mode of displaying a game (activity) selected by the user in the main segment and displaying set up campaigns in two side segments.

### Specific description

Invention will be described on an example of operating the system for presentation of audiovisual content to end user by means of a client application installed on a digital device of the end user, where on the working area **0** displayed on the display of the digital device of the end user there is performed presentation of audiovisual content distributed by the system, as will be described further text, whereby on the working area **0** other informations are presented simultaneously and throughthis the interaction of the end user with the working area **0** and with the processes displayed or presented continuously on the working area **0** is performed.

The client application is stored on a distribution server of the service provider for downloading and subsequent installation on a digital device of the end user, whereby the server is accessible from the digital device of the end user by means of a commonly accessible data network, especially by means of the Internet, using a standard web browser. The end user downloads the application to his or her digital device, for example to a computer of any type (PC, MAC, etc.) or to a mobile device, such as a telephone, a tablet, PDA, etc., and installs it. The client application supports the operating system of the digital device of the end user, which is verified automatically during the installation by well-known procedures.

To start the client application for the first time, the end user must enter his or her unique identification data, e.g. name and password, whereby the client application logs on to the end user's account. The user's account is created by the user either beforehand via a web site of the system operator, or it is created during the installation of the client application on the digital device of the end user, or it is created when starting the client application for the first time. Thus the identification of the end user towards the provider of the service is secured.

Once the client application is started, it will log on to the server of the service provider who, on the basis of identification data of the end user and on the basis of his or her location, the language setting of the digital device of the end user, etc., downloads the audiovisual content intended for later displaying during using the client application, as will be described further, and stores it on a local storage (hard disc, flash disc, memory card etc.) of the digital device of the end user. Especially when installing the client application on a mobile digital device of the end user, such as mobile phones, tablets etc., the end user can limit the amount of downloaded data, for instance limit the amount of downloaded data to only a certain amount of audiovisual files, or to a certain data volume of audiovisual files, or the end user can pause downloading the audiovisual content, for instance until being logged on to a more efficient data connection, such as a home wireless (wi-fi) network, etc. In order to begin working with the client application, however, there might be a condition that at least one audiovisual file must be downloaded at once, or there might be a condition that the client application can be used on a temporary basis, for example limited by a time interval, even without downloading audiovisual content, which, nevertheless, must be downloaded afterwards, otherwise all bonuses for using a client application by the end user within the period during which no audiovisual content is downloaded are nullified.

The client application perfoms updating of the entered campaigns and their downloading to the digital device of the end user automatically in predetermined time intervals.

After downloading audiovisual content or after the end user's decision to pause downloading audiovisual content, GUI of the client application is started, GUI consisting of a working area divided into segments, from which at least two can be switched over according to the end user's interaction.

Main segment **1** has biggest area size and in the standard state of the working area there is performed presentation of the entered campaigns. In the illustrated embodiment the main segment **1** has a area size that covers at least 50% of the area size of the whole working area. In the illustrated embodiment the main segment **1** is situated on the working area in such a manner that two of its side edges are positioned on two side edges of the working area, more specifically, two mutually perpendicular side edges of the main segment **1** are positioned on two side edges of the working area **0.**

Arranged on one side of the main segment **1** is a column of at least three side segments **2,** which means that the column of side segments is arranged between the side edge of the main segment **1** and the side edge of the working area **0.**

In the illustrated example of embodiment the column of side segments **2** is arranged in the left-hand section of the working area **0**, spanning the entire height of the working area **0,** whereby the main segment **1** is arranged in the right-hand section of the working area **0** and between the bottom edge of the main segment **1** and the bottom edge of the working area **0** there is arranged a supplementary segment **3.**

Side segments **2** display information, such as presentation information, for example logos of companies or campaign submitters, time in the respective time zone, weather information, name of days and other significant days, etc. At least one of the side segments **2** displays interactive icons of games or other entertaining activities and thus acts as an interactive side segment **20.** The supplementary segment **3** is formed by a relatively narrow band and is particularly suitable for displaying written information, such as the latest news provided by a chosen news agency.

On the working area, usually in the top right-hand corner, is arranged a standard bar **4** for controlling software "panels", that is the "minimalize", "maximalize" and "close" buttons.

The interactive side segment **20** is functionally interconnected with the main segment **1** and at least one other side segment **2,** whereby this functional interconnection consists in that as soon as the end user selects in the game side segment **20** a game or another activity, which he or she wants to start, this game or activity starts in the main segment **1** and at the same time the presentation of the submitted campaigns that has been running in the main segment **1** "switches over" to at least one side segment **2,** as is apparent from the change of the working area **0** in Fig. 1 into the configuration of the working area **0** in Fig. 2, which is denoted more specifically by the words "GAMES", "VIDEO" and "GAME". Thus a sufficiently large area is provided for interaction (gaming) of the end user in the main segment **1** and, moreover, uniterrupted presentation of submitted campaigns is ensured. With respect to the area it is favourable if, upon starting a game, presentation of submitted campaigns that has been running in the main segment **1** switches over to the two side segments **2,** whereby a sufficient area size of the area for the submitted campaign is achieved.

Another factor in increasing the attractiveness of this method and system of presentation of audiovisual content to the end user is the fact that each end user's account is assessed by a system of recording and assessing the activity of the end user, so that on the basis of the assessment of the the activity of a particular end user logged on to his or her user's account in the system, for example according to the duration of the operation of the client application on the digital device of the end user, according to the results of the played games and other activities carried out with the application, according to the ranking of the end user after the games played within a particular week, month, year, according to the scores of mutual matches and results of betting of individual end users competing with one another by means of the client application, etc., sums of virtual currency are added to the particular end user's account or withdrawn from it, the virtual currency being exchangeable in a specific exchange rate for real money, which means that the end user can merely on the basis of using the client application within this method and system of presentation of audiovisual content make a real financial profit. The results of assessed activities of the end user are included in one of the side segments **2,** preferably in the interactive side segment **20,** for example the duration of the client application operation is indicated there, as well as the amount of the virtual currency, possibly also its conversion into real money.

The client application as a whole works in such a manner that after being started, the working area 0 of the client application is displayed on the whole area of the display of the digital device of the end user. It is possible to minimalize the application by means of the press button of the standard bar **4** for controlling software "panels", by which means the client application remains active (it is not closed), but its working area **0** is not displayed on the display. Furthermore, the client application can be set in such a way that if the digital device of the end user enters an idle state and the client application is started, the working area **0** of the client application is automatically displayed on the display of the digital device of the end user as the so-called "screensaver", whose otherwise standard function of automatic deactivation of the screensaver is deactivated upon starting using the digital device. As soon as the end user intends to resume using the digital device and wants to use simultaneously another application, other than the client application according to this invention, the end user must deactivate the display of the working area **0** of the client application manually, i.e. by means of the bar **4** for controlling software "panels". In another embodiment the client application is provided with a complete function of the "screensaver", i.e. it is automatically deactivated from the display, once the end user resumes working with the digital device, whereby the client application remains active "in the background" and the user can display it on the display of the digital device according to the operational system of the digital device any time in a standard way for continuing to work with the client application. In another embodiment the client application is not provided with the function of the "screensaver" or it is provided with the function of the "screensaver" which can be deactivated by the user of the digital device in the user's interface of the client application.

It is apparent that the above description of preferable embodiments is illustrative and is not limiting with regard to other possible embodiments within the scope of the patent claims.

### Industrial applicability

The invention is applicable as an electronic interactive advertising and presentation method and system.

## Claims

1. A method of presentation of audiovisual content to end user, in which in part of area of a remote display device there is performed presentation of audiovisual content, whereby in remaining part of the area of the remote display device there are presented other information as part of working area, **characterized in that** the audiovisual content is presented in part of the area of the display of the digital device of the end user after starting a client application by the end user, whereby in the remaining part of the area of the display within working area of the client application there are presented apart of presentation of other informations also options for interaction of the end user to the working area of the client application, wherein after the interaction of the end user with the working area of the client application changes the area of presentation of audiovisual content within the working area of the client application, and in original area of the presentation of audiovisual content there is presented an interactive activity selected by the end user.

2. A method according to Claim 1, **characterized in that** when starting the client application for the first time, the end user enters his or her unique identification data and the client application logs on to the end user's account and the audiovisual content intended for later displaying during work with the client application is then downloaded to the digital device of the end user and is stored in it.

3. A method according to Claim 2, **characterized in that** the audiovisual content is updated, downloaded to the digital device of the end user and stored automatically in predetermined intervals.

4. A method according to Claim 1, **characterized in that** the presentation of audiovisual content is performed in the main segment (1) of the working area of the client application with the minimum area size of 50% of the area of the whole working area, whereby next to the main segment is in the column of at least three side segments (2) presented other information, at least in one side segment (2) there are presented options for interaction of the end user with the working area of the clent application, whereby after the interaction of the end user with the working area of the client application the presentation of audiovisual content is switched over to at least one of the side segments (2) and in the original area of the presentation of audiovisual content there is presented an interactive activity selected by the end user.

5. A method according to Claim 4, **characterized in that** under the main segment (1) there is presented written information.

6. A method according to Claim 1, **characterized in that** after starting the client application by the end user is on the basis of activities of a particular end user logged on to his or her user's account recorded, the duration of the operation of the application on the digital device of the end user, scores of played games and other activities with the client application and assessed, as well as the end user's ranking in played games within a particular week, month or year, scores of mutual matches and results of betting of individual end users competing with one other by means of the client application, and sums of virtual currency are added to the end user's account or withdrawn from it, the virtual currency being exchangeable in a specific exchange rate for real money.

7. The system of presentation of audiovisual content to end viewer, which comprises storage means for remote storage of audiovisual content by its creator and further comprises means for ensuring presentation of audiovisual content on a remote display device, **characterized in that** the system further comprises a client application installable on a digital device of the end user, the client application comprises means of remote connection of the digital device of the end user through a communication network to the system and for logging in of the end user to the end user's account in the system, whereby the client application comprises a graphical user interface shown on the display device of the digital device of the end user and the graphical user interface is divided into a segment for separate presentation of audiovisual content distributed by the system, segments for presentation of other information and at least one segment for interaction of the end user with the graphical user interface and with processes displayed or presented continuously on the graphical user interface, where the segment for interaction is functionally interconnected with the segment for separate presentation of audiovisual content and at least one other segment for presentation of other information.

8. A system according to Claim 7, **characterized in that** the segment for separate presentation of audiovisual content is the main segment (1), wherein on one of its sides there is arranged a column of at least three side segments (2), at least one of which acts as an interactive side segment (20) for the interactive activity of the end user.

9. A system according to Claim 8, **characterized in that** the main segment (1) has the biggest area size covering the minimum of 50% of the area of the whole working area of the client application.

10. A system according to Claims 87 or 9, **characterized in that** the column of side segments (2) is arranged in left-hand side section of the working area (0) spanning the entire height of the working area (0), whereby the main segment (1) is arranged in right-hand side section of the working area (0) and betweenbottom edge of the main segment (1) and bottom edge of the working area (0) there is arranged a supplementary segment (3) for text information.

11. A system according to Claim 7, **characterized in that** the segment for the interactive activity is functionally interconnected with the segment for separate presentation of audiovisual content and two other segments for presentation of other information.

12. A system according to Claims 7 or 11, **characterized in that** the functional interconnection of segments is created by switching over the displayed content between the segments.

13. A system according to any of Claims 7 to 12, **characterized in that** to each end user's account in the system is assigned a system of recording and assessing the activity of a particular end user and one of the segments for presentation of other information includes information about the current assessment of the end user's activity.
